# EUROPEAN PATENT APPLICATION

(11) **EP 2 338 761 A1**
(43) Date of publication of application: **29.06.2011**
(21) Application number: 10196331.2
(22) Date of filing: 21.12.2010
(51) Int. Cl.: B61D 35/00

(54) **System and method for draining sewage from the vehicles**

(30) Priority: 21.12.2009 IT TO20091005
(71) Applicant: General Vacuum s.r.l., 15076 Ovada (AL) (IT)
(72) Inventor: Della Valle, Gianluca, 20038, Seregno (MI) (IT)
(74) Representative: Robba, Pierpaolo

(57) **Abstract**

The present invention relates to a system and a method for draining sewage from vehicles that allows to automate the draining of said sewage. The system according to the invention comprises a suction unit (10) for sucking the sewage from the tank of vehicles and possibly a disinfection unit for injecting a disinfecting mixture into said tank; the system according to the invention also comprises a management and control unit (30) that allows automated control of the said suction unit (10) and - if provided - of said disinfection unit. According to the invention, the user can select a preset work programme by means of said management and control unit (30), which controls the number, sequence and duration of the work cycles performed by said suction unit (10) and - if provided - by said disinfection unit.

## Description

### Technical Field

The present invention relates to a system and a method for draining sewage from vehicles.

More specifically, the present invention relates to a system and a method that allow to automate the draining of sewage from vehicles.

### Prior art

Systems for draining sewage from the storage tanks of vehicles (such as trains, planes, boats, cars, etc.) by means of suction of the sewage are known. These systems provide for the regular draining of sewage accumulated in the tanks of vehicles and they are usually provided in stations or plants wherein the vehicles stop for this purpose.

These known systems in general include a suction unit comprising a terminal - the so-called "gun" - connected by means of a flexible hose to a vessel that can be led or kept under vacuum conditions.

In order to use these systems, the user must connect the gun of the suction unit to the tank of the vehicle and then press a control button provided on the gun for controlling the opening of an interface pneumatic valve, which separates the region maintained under vacuum from the region at atmospheric pressure; the opening of the interface valve allows to put the fuel tank in communication with the vacuum vessel.

As a result, at the opening of the interface valve, the sewage in the tank (at atmospheric pressure) are sucked into the flexible hose of the suction unit up to the vacuum vessel, from which it will be successively transferred to a treatment system.

A system for draining sewage of the above-described type is illustrated, for example, in GB 2070694.

In some more advanced known systems, the opening of the interface valve is controlled by a triggering device that, using the vacuum itself as driving force, provides for the opening of said interface valve, closing it again only when the vehicle tank is completely emptied. The triggering device is in turn manually controlled by the user through a control button placed on the gun. However, these known devices, although they provide for quite satisfactory performances, are not free from drawbacks.

In particular, they do not allow the full automation of the system and of the procedures related to its operation and force the user to manually control the sequence of such procedures and to continuously monitor the execution thereof.

It is also to be noted that in many cases, in addition to drain sewage from the tank, it is necessary - or at least appropriate - to carry out a periodic disinfection of the tank, by injecting therein a disinfecting mixture. When the sewage draining is to be followed by one or more cycles of disinfection of the vehicle tank, the above-mentioned drawbacks of the prior art are particularly relevant, since in these cases the effort required from the user is greater.

As an alternative to the above-described systems for draining sewage and recovering it in appropriate containers for later disposal, systems are known which provide for discharging sewage in the external environment, while the vehicle is moving.

A system of this second type is illustrated for example in EP 1 291 468, wherein a drain valve connected to the tank of a toilet on a vehicle is opened whenever the toilet is used a preset number of times or the tank level reaches a preset level, provided that the vehicle speed exceeds a certain threshold.

While these systems allow to avoid the labour of a user, they also have obvious and significant drawbacks, first of all the fact that it is virtually impossible to effectively discharging all the sewage - which is usually discharged from the tank by the sole effect of gravity force - and that it is not possible to carry out a simultaneous disinfection of the tank.

An object of the present invention is therefore to provide for a system for draining sewage from the tanks of vehicles that overcomes the drawbacks of the prior art and allows for a full automation of the operation of the system itself, while ensuring that these tanks are effectively and completely emptied.

Another object of the present invention is to provide for a system for draining sewage from the tanks of vehicles which allows the simultaneous disinfection of said tanks.

A further object of the present invention is to provide for a system capable of carrying out a plurality of different complex working programmes, consisting of a sequence of different work cycles.

An object of the present invention is also to provide for a method for draining sewage from the tanks of vehicles allowing a full automation of its steps, while ensuring that said tanks are effectively and completely emptied.

Another object of the present invention is to provide for a method for draining sewage from the tanks of vehicles which allows the simultaneous disinfection of said tanks.

A further object of the present invention is to provide for a method for carrying out a plurality of different complex working programmes, consisting of a sequence of different work cycles.

These and other objects are achieved by the system and method for draining sewage from the vehicles as claimed in the appended claims.

### Disclosure of the Invention

Thanks to the fact that the system according to the invention includes a management and control unit comprising electric means for controlling the opening and closing of the interface pneumatic valve and a device for controlling the electric power supply to said electric means in accordance with preset work cycles, the operation of said system will be completely automated and the only task that will be carried out by the user will be the selection of an appropriate work programme.

Said electric means preferably comprise an electrovalve.

Said device for controlling the electric power supply to the electrovalve preferably comprises a microprocessor.

According to a preferred embodiment of the invention, the system includes means for carrying out the sanitation of the tank, for example by means of one or more disinfection cycles obtained by injecting into the vehicle tank a mixture of water and disinfectant. According to this embodiment, the suction unit of the system will not only provide for the suction of sewage in the vehicle tank but also for the suction of the disinfecting mixture at the end of each disinfection cycle. Advantageously, the system according to the invention allows the full automation of all the different work cycles, both with respect to the number of said cycles (which may vary from a minimum of 1 to a maximum of 10) and with respect to the length of said cycles (varying from a few seconds to 1 - 2 hours).

Moreover, the system according to the invention allows to carry out a plurality of fully automated complex work programmes, differing from one another as to the kind and features of the single work cycles forming them.

Thanks to the opportunity of selecting a programme, corresponding to a preset sequence of work cycles, the method according to the invention allows to drain sewage from the tank of a vehicle and - in case - to successively sanitate said tank in a completely automated way, while ensuring to completely and effectively drain sewage and - in case - to effectively disinfect the tank.

### Brief Description of Drawings

Additional features and advantages of the invention will be evident from the following detailed description of a preferred embodiment thereof, given by way of non-limiting example, with reference to the accompanying drawings, wherein:
- Figure 1 is a schematic representation of the system for draining sewage according to the invention;
- Figure 2 is an enlarged detail of Figure 1;
- Figure 3 is a block diagram of an example of work programme carried out in following the method according to the invention.

### Detailed Description of a Preferred Embodiment of the Invention

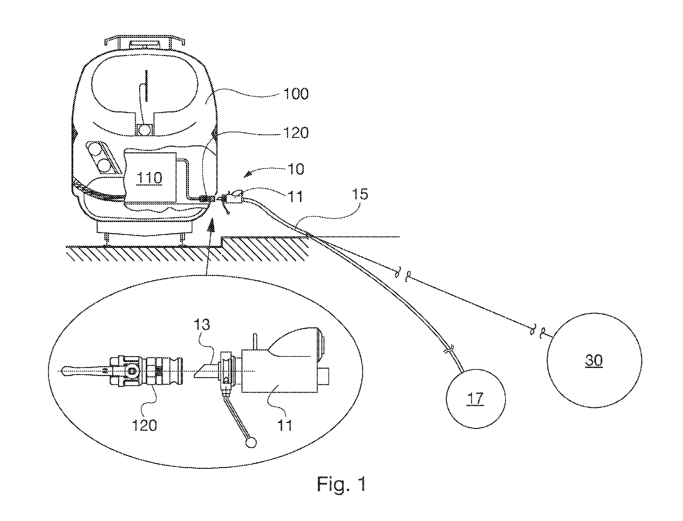

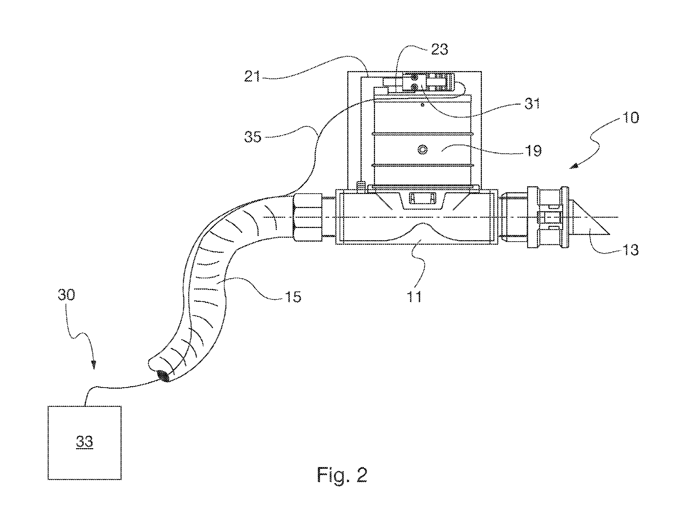

With reference to Figures 1 and 2, the system for draining sewage according to the invention is shown, said system being applied to the tank of a vehicle, namely to the tank 110 of a train 100.

Said system is usually intended to be installed in stations or similar plants where the train 100 periodically stops.

The system according to the invention is provided with a suction unit 10 which includes a terminal or gun 11 having a connector 13 for connection to a corresponding fitting 120 mounted on the vehicle 100 and connected to the tank 110.

The gun 11 is connected by means of a flexible hose 15 to a vessel 17 that is maintained under vacuum conditions, so that the sewage can be sucked from the vehicle 100 when said vessel 17 is connected with the tank 110 of said vehicle.

The system according to the invention is also provided with a management and control unit 30, preferably located in a location remote from the suction unit 10.

With particular reference to Figure 2, the gun 11 of the suction unit 10 contains inside an interface pneumatic valve 19, which is normally closed, the opening of which allows to put the tank 110 of the vehicle 100 (at atmospheric pressure) in communication with the vessel 17 of the suction unit 10 (under vacuum conditions), thus allowing to suck sewage present in this tank through the flexible hose 15 to said vessel 17, from which it will be successively transferred to a treatment system.

The interface valve 19 includes a diaphragm shutter or a piston shutter that can be operated exploiting the pressure of the vacuum itself.

This interface valve should be sized so as to have a diameter that on the one hand allows the passage of sewage without the risk of clogging, and the other hand avoids to slowing down the outflow of said sewage. Preferably, said diameter will be comprised between 32 mm and 90 mm. According to the invention, the shutter of said interface valve 19 is driven by electric means, namely by means of an electrovalve 31. To this purpose, that electrovalve 31 is connected on the one hand to the flexible hose 15 under vacuum conditions by means of a first duct 21 and on the other hand to the shutter of the pneumatic valve 19 by means of a second duct 23.

Moreover, the electrovalve 31 is electrically connected by means of an electric cable 35, which is for instance inserted into the flexible hose 15 or directly embedded in said hose, to a microprocessor 33, which is capable of controlling the electric power supply to said electrovalve. Advantageously, said microprocessor 33 may therefore be in a position remote from the electrovalve 31 controlled thereby.

To this purpose, it is also possible to provide - as an alternative to a wired connection - for wireless communication means between said microprocessor and said electrovalve.

Said electrovalve 31 will be in turn sized so as to have a diameter that on the one hand avoids the risk of clogging and the other hand avoids the risk of dispersing the vacuum signal. Preferably, said diameter will be comprised between 1/8" and 1" (i.e. between 0,3175 cm and 2,54 cm). Furthermore, the electric power supply to said electrovalve 31 will be at low-voltage, either in alternate current or in direct current, and preferably at a voltage comprised between 6 V and 48 V.

Advantageously, both the interface pneumatic valve 19 and the electrovalve 31 may be enclosed in single housing 25; preferably, said housing is the casing itself of the gun 11 of the suction unit 10.

The operation of the system for draining sewage according to the invention is substantially carried out as described below.

When a user has to provide for draining sewage from the tank 110, it will be sufficient to connect the gun 11 to the fitting 120 of the tank 110 and select (even from a remote location, in case) an appropriate work programme on the microprocessor 33 of the control and management unit 30.

The microprocessor 33 will automatically provide to supply the electrovalve 31 for a preset number of cycles, each having a preset duration, for correspondingly controlling the opening and closing of the interface valve 19.

It is evident that the user, by selecting among several preset programmes on the microprocessor 33, will be able to automatically carry out different suctions and for different time periods.

In this way, any intervention of the interface valve can be handled with high flexibility, accurately defining cycles and response times of such intervention.

Since as a rule the tanks of vehicles, after being emptied from sewage, must be disinfected and sanitized, the system according to the invention can advantageously include a disinfection unit (not shown).

This disinfection unit substantially includes a tank containing a water and disinfectant mixture and means for injecting said mixture into the tank 110 of a vehicle 100. Alternatively, said unit could include separate tanks for the water and the disinfectant and means for mixing them. Advantageously, the microprocessor 33 of the management and control unit 30 will be able to control also the operation of said injection means of said disinfection unit.

In order to achieve satisfactory results, it is often necessary to inject the disinfecting mixture into the tanks for 2 - 3 disinfection cycles.

It is evident that in this case, the suction unit 10 can be used both for sucking the sewage and for sucking the water and disinfectant mixture at the end of each disinfection cycle.

In this respect, it is also evident that the microprocessor 33 can be provided with a memory wherein several possible work programmes will be stored, each programme comprising suction and / or disinfection cycles and characterized by specific numbers, sequences and durations of said cycles.

It is also evident that the more the number of suction cycles in the work programme increases, the more the advantages in using the system according to the invention correspondingly increase, as said system allows the full automation in carrying out the operation of the system itself.

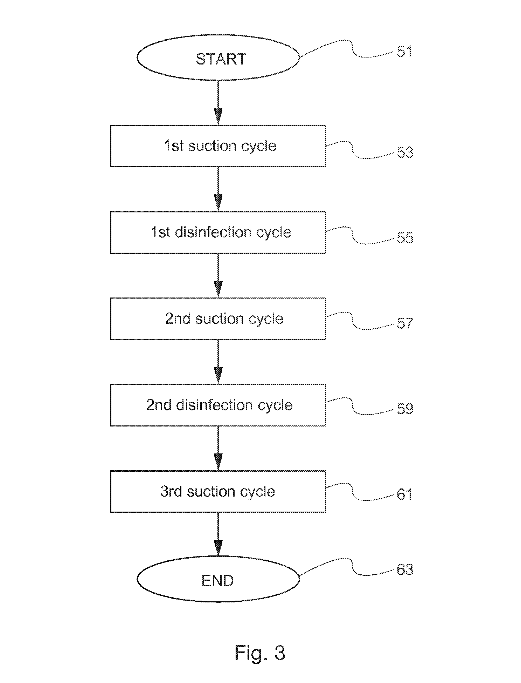

Turning now to Figure 3, a block diagram schematically illustrating the steps of the method according to the invention in the case of a specific work programme given by way of example is shown.

At step 51, the user selects a preset work programme stored in the microprocessor 33 of the management and control unit 30, thus starting the work programme itself.

At step 53, a first suction cycle from the tank 110 is performed, during which the sewage present in this tank is sucked. This step 53 can have for instance a duration of 4 minutes.

Subsequently, at step 55 a water and disinfectant mixture (first disinfection cycle) is injected into the tank 110, now emptied from sewage, for example for 1 minute.

At the end of this first disinfection cycle, at step 57 a second suction cycle is performed, during which the water and disinfectant mixture is sucked from the tank 110. Said second suction cycle can have for instance a duration of 2 minutes.

Subsequently, at step 59 a water and disinfectant mixture is injected again into the tank 110 (second disinfection cycle), again for 1 minute. After this second disinfection cycle, at step 61 a third and final suction cycle is carried out, during which the water and disinfectant mixture is sucked from the tank 110, again for 2 minutes.

With this third suction cycle the work programme comes to an end, at step 63.

All the above-mentioned cycles are carried out automatically according to the information contained in the microprocessor 33 of the management and control unit 30 and, once the work programme is selected, the user no longer has to actively intervene on the operation of the system.

It is therefore evident that the system and method according to the invention allow to achieve the objects set forth above.

It is also evident that the above description has been given by way of mere example and that numerous variants and modifications are possible without departing from the scope of protection of the present invention as defined by the appended claims.

## Claims

1. System for draining sewage from the tank (110) of vehicles (100), said system being of the kind comprising a suction unit (10) including a terminal or gun (11) provided with a connector (13) for being connected to said tank (110), a vessel (17) kept under vacuum conditions and connected to said gun (11) and an interface valve (19) allowing or preventing the connection between said vessel (17) and said tank (110), **characterized in that** said system further comprises a management and control unit (30) including:
- electric means (31) for controlling the opening and closing of said interface valve (19);
- a device (33) for controlling the electric power supply to said electric means.

2. System according to claim 1, wherein said electric means comprise an electrovalve (19).

3. System according to claim 1 or 2, wherein said device comprises a microprocessor (33).

4. System according to claim 3, wherein said microprocessor (33) comprises a memory wherein preset work programmes are stored, each of said work programmes being **characterized by** specific number, sequence and duration of opening and closing cycles of said interface valve.

5. System according to claim 3, wherein said microprocessor (33) is provided in a location remote from said suction unit (10).

6. System according to any of the preceding claims, wherein said system further comprises a disinfection unit, including a tank containing a water and disinfecting mixture and means for injecting said mixture into said tank (110) of said vehicle (100).

7. System according to claim 5, wherein said management and control unit (30) comprises a device (33) for controlling said injection means of said disinfection unit.

8. Method for draining sewage from the tank (110) of a vehicle (100) through suction of said sewage from said tank, **characterized in that** it comprises the following steps:
- connecting said tank (110) to a suction unit (10), comprising a vessel under vacuum conditions, which is connected to said tank (110) by means of an interface valve (19);
- providing a management and control unit (30) comprising:
- electric means (31) for operating said interface valve (19);
- a device (33) for controlling the electric power supply to said electric means (31);
- inputting the data of one or more preset work programmes into said management and control unit (30), each of said work programmes being **characterized by** specific number, sequence and duration of opening and closing cycles of said interface valve (19) ;
- selecting one of said work programmes;
- sucking said sewage from said tank according to the modalities of said selected work programme.

9. Method according to claim 8, wherein the following steps are further provided:
- connecting this tank (110) to a disinfection unit comprising means for injecting a disinfecting mixture into said tank (110) of said vehicle;
- inputting the data of one or more preset work programmes into said management and control unit (30), each of said work programmes being **characterized by** specific number, sequence and duration of injection cycles of said disinfecting mixture;
- selecting one of said work programmes;
- injecting said mixture into said tank according to the modalities of said selected work programme.

10. Method according to claim 9, wherein the following step is also provided:
- sucking said disinfecting mixture from said tank according to the modalities of said selected work programme.
